Europäisches Patentamt

European Patent Office

Office européen des brevets

(19)

(11) Numéro de publication: **0 117 210**
**B1**

(12) **FASCICULE DE BREVET EUROPEEN**

(45) Date de publication du fascicule du brevet: **20.07.88**

(21) Numéro de dépôt: **84400329.3**

(22) Date de dépôt: **17.02.84**

(51) Int. Cl.⁴: **F 16 L 11/08, F 16 L 11/10**

(54) Tuyau aspiration/refoulement de produits liquides ou solides.

<table>
<tr><td>

(30) Priorité: **18.02.83 FR 8302630**

(43) Date de publication de la demande:
**29.08.84 Bulletin 84/35**

(45) Mention de la délivrance du brevet:
**20.07.88 Bulletin 88/29**

(84) Etats contractants désignés:
**AT BE CH DE GB IT LI LU NL SE**

(56) Documents cités:
**CH-A- 461 198**
**GB-A- 591 307**
**GB-A-1 239 387**

</td><td>

(73) Titulaire: **Caoutchouc Manufacturé et Plastiques Société Anonyme dite:**
**143, rue Yves-le-Coz B.P. 554**
**F-78005 Versailles Cedex (FR)**

(72) Inventeur: **Lambourg, Michel**
**304 Impasse de Bellevue**
**F-63370 Lempdes (FR)**

</td></tr>
</table>

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 117 210 B1

## Description

L'invention est relative à un tuyau souple d'aspiration et de refoulement de produits solides ou liquides, à base de caoutchouc et comportant divers éléments de renforcement, du type utilisé pour le dépotage de camions citernes par exemple et dont les caractéristiques essentielles sont la souplesse et la faculté d'accepter de faibles rayons de courbure afin de permettre une manutention aisée.

Il est connu, d'après le document GB—A—591 307 de COMPOFLEX, par exemple, que la réalisation de tuyaux d'aspiration et de refoulement très souples, en matière plastique ou en caoutchouc, avec des éléments renforçants, peut se faire en emprisonnant entre deux hélices métalliques ou plastiques, l'une interne au tuyau, l'autre externe, des éléments de renfort et de transport du matériau tels que gaines, films et tissus non solidaires les uns des autres.

Si ces tuyaux présentent, effectivement, la souplesse désirée et acceptent de faibles rayons de courbure, ils ont l'inconvénient en raison de la présence de l'hélice interne, d'engendrer de fortes pertes de charge lors de la manutention des liquides ou des pulvérulents par création de turbulences d'écoulement, d'être sensibles à la corrosion par le fluide véhiculé et d'être difficiles à nettoyer du fait de la saillie des spires de l'hélice interne. En outre, l'absence de liaison entre les éléments constitutifs crée un risque de fuite par diffusion des fluides véhiclés entre les couches de matériaux et oblige à l'emploi d'un joint que vient encapuchonner l'extrémité du tuyau lors du montage du raccord.

D'autres réalisations, telle celle décrite dans le document CH—A—461 198 de KLEBER COLOMBES, présentent l'inconvénient, par leur construction, de créer, sous l'effet des sollicitations en service, un "effet poutre" peut favorable à la souplesse du tuyau.

Pour éviter les inconvénients précités tout en conservant la souplesse du tuyau, l'invention décrite a pour objectif la réalisation d'un tuyau en deux parties co-axiales, l'une, interne, assurant les fonctions d'étanchéité et de résistance mécanique, l'autre extérieure assurant la fonction de protection externe. Cette construction permet, en dissociant les éléments fonctionnels du tuyau en caoutchouc renforcé, de conserver la souplesse et l'adaptation aux faibles rayons de courbure nécessaires à l'utilisation. En isolant l'hélice métallique ou plastique de renforcement du fluide à véhiculer par un tube intérieur en caoutchouc souple et continu, les problèmes de turbulences d'écoulement — donc de perte de charge — la difficulté de nettoyage et les risques de corrosion se trouvent éliminés alors que la résistance à la pression ou à la dépression est maintenue.

La résistance extérieure est assurée par la seconde partie du tuyau, co-axiale à la première, qui comporte un revêtement en tissu enduit de plastique ou de caoutchouc résistant à l'abrasion et à l'environnement surmonté d'une hélice en matériau métallique ou plasitique faisant partiellement saillie.

Cette construction co-axiale évite, en service, le phénomène d'"effet poutre" en permettant le glissement de l'élément hélicoïdal externe par rapport à l'élément interne, ce qui accroît la souplesse du tuyau. Par ailleurs, lors d'une utilisation en aspiration, la dépression interne tend à accroître la séparation des deux éléments coaxiaux et contribue encore à la réduction de "l'effet poutre".

Cette construction ne nécessite l'emploi d'aucun joint pour le montage des raccords puisque l'étanchéité est totale grâce à la présence du tube intérieur continu.

L'invention est donc relative à un tuyau souple d'aspiration et de refoulement pour tous fluides, en caoutchouc comportant des éléments de renforcement, dans lequel les fonctions étanchéité et résistance mécanique interne d'une part et protection externe d'autre part sont dissociées par une réalisation en deux parties co-axiales à savoir: une partie interne constituée d'éléments solidarisés comprenant un tube intérieur lisse en caoutchouc au contact du fluide véhiculé, une paroi renforcée de tissus et une hélice en matériau métallique ou plastique; et une partie externe constituée d'éléments désolidarisés comprenant un revêtement protecteur souple épousant les spires de l'hélice de la partie interne et une seconde hélice également en matériau métallique ou plastique posée dans les creux du revêtement, entre les spires de la première hélice, et faisant partiellement saillie par rapport à la surface externe du tuyau.

Cette construction en deux parties co-axiales permet d'éviter les phénomènes d'effet poutre sous les sollicitations de service.

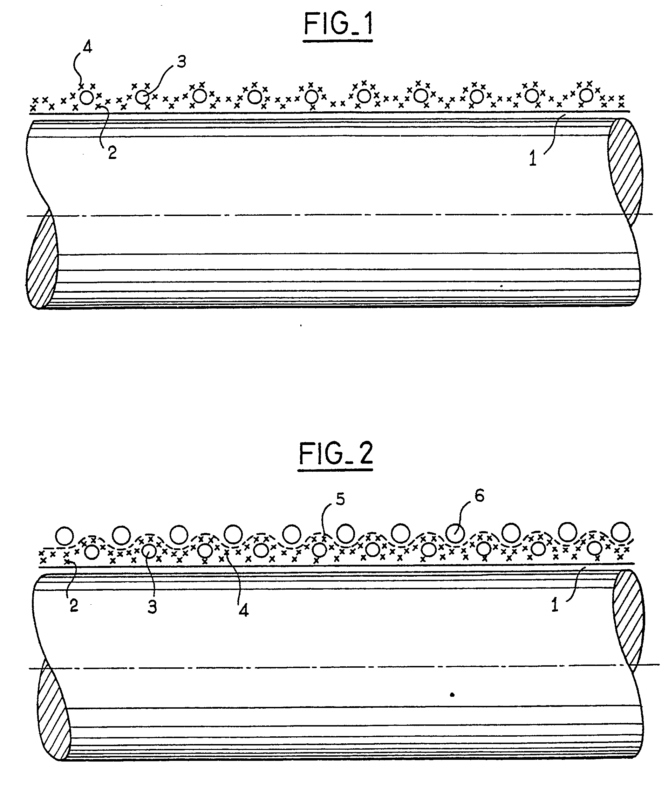

La constitution de ce tuyau sera plus facilement comprise en se reportant aux figures 1 pour la réalisation de la première partie et 2 pour la seconde partie et l'ensemble du tuyau.

La figure 1 montre le tube intérieur en caoutchouc souple continu (1) dont la nature est adaptée à celle du fluide transporté par emploi soit d'un mélange résistant à l'agressivité chimique ou au caractère abrasif des produits véhiculés, soit d'un mélange assurant l'hygiène, par non contamination, dans le cas de manutention d'un fluide alimentaire, soit encore d'un mélange conducteur de l'électricité susceptible d'éliminer l'électricité statique dangereuse dans diverses applications comme, par exemple, le dépotage d'hydrocarbures.

Le tube interne (1) a une épaisseur généralement comprise entre 1 et 5 millimères. Il est revêtu, lors de la confection du tuyau, par une nappe de renforcement (2) en tissu à larges mailles sur laquelle est disposée, en saillie, une hélice (3) en matériau métallique ou plastique destinée à assurer la souplesse du tuyau, et dont le diamètre est compris entre 1 et 6 millimètres, le pas de l'hélice variant en fonction de son diamètre et de celui du tuyau, ladite hélice étant, elle-même, recouverte d'une seconde nappe de tissu (4) qui la protège et qui épouse parfaitement les éléments du tube (1), de la nappe de renforcement (2) et de l'hélice (3) déjà positionnés.

La seconde partie est alors confectionnée selon la figure 2: sur la nappe de renforcement (4) est posé, non collé, un tissu enduit de matière plastique ou de caoutchouc (5) assurant la protection contre l'environnement et les intempéries, puis une hélice de fil métallique (6) qui peut être galvanisé ou non ou de fil plastique, d'un diamètre compris entre 1 et 6 millimètres; cette hélice (5) est disposée de manière à se trouver placée dans le même sens que l'hélice (3) de la première partie et entre ses spires, en faisant partiellement saillie par rapport à la surface externe du tuyau. La confection se termine alors par la pose de raccords sertis, sans interposition de joints.

## Revendications

1. Tuyau souple en caoutchouc pour aspiration ou refoulement de fluides, comprenant deux parties co-axiales à savior: une partie interne comprenant un tube intérieur lisse (1) en caoutchouc au contact du fluide véhiculé, une paroi renforcée de tissu (2) et une hélice en matériau métallique ou plastique (3); et une partie externe comprenant un revêtement protecteur souple (4) épousant les spires de l'hélice (3) de la partie interne et une seconde hélice également en matériau métallique ou plastique (6) posée dans les creux du revêtement, entre les spires de la première hélice caractérisé en ce que le spires de la seconde hélice font partiellement saillie par rapport à la surface externe du tuyau et en ce que les éléments de la partie interne sont solidarisés entre eux et ceux de la partie externe sont désolidarisés de sorte que les fonctions étanchéité et résistance mécanique interne d'une part et protection externe d'autre part sont dissociées par une construction empêchant tout phénomène d'effet poutre en cours d'utilisation et favorisant la soupless du tuyau.

2. Tuyau selon la revendication 1, caractérisé en ce que l'hélice de lar partie interne du tuyau (3) est comprise entre deux couches de tissu de renforcement (2) et (5), la couche de tissu la plus externe (5) de cette première partie épousant les spires de cette hélice (3) en pénétrant entre elles.

3. Tuyau selon les revendications 1 ou 2, caractérisé en ce que le revêtement protecteur (4) de la seconde partie du tuyau est en tissu enduit de caoutchouc ou de plastique non adhérent à la surface externe de la partie interne du tuyau.

4. Tuyau selon l'une des revendications 1 à 3 dans lequel le tube interne, lisse (1), est réalisé dans un mélange de caoutchouc capable de résister soit aux fluides chimiquement agressifs, soit aux fluides abrasifs ou dans un mélange de caoutchouc présentant les caractères d'hygiène requis pour la manutention de produits alimentaires ou dans un mélange de caoutchouc conducteur de l'électricité et susceptible d'éliminer l'électricité statique.

## Patentansprüche

1. Weicher Schlauch aus Gummi zum Ansaugen oder Ausstoßen von Flüssigkeiten, dadurch gekennzeichnet, daß er zwei koaxiale Teile umfaßt, nämlich ein aus vereinten Elementen gebildetes Innenteil, bestehend aus einem glatten Innenrohr aus Gummi, das mit der beförderten Flüssigkeit in Berührung steht, einer Verstärkungsgewebelage und einer Spirale aus Metall oder Kunststoff, und ein aus getrennten Elementen gebildetes Außenteil, bestehend aus einer die Windungen der Spirale des Innenteils umgebenden weichen Schutzverkleidung und einer zweiten Spirale aus Metall oder Kunststoff, die in die Wellentäler der Verkleidung zwischen die Windungen der ersten Spirale eingelegt ist und über die Außenfläche des Schlauches teilweise vorspringt.

2. Schlauch nach Anspruch 1, dadurch gekennzeichnet, daß die Sprirale des Innenteils des Schlauchs zwischen zwei Verstärkungsgewebelagen angeordnet ist, wobei die äußerste Gewebelage dieses ersten Teils die Windungen der Spirale umhüllt, wobei es zwischen diese eindringt.

3. Schlauch nach Anspruch 1 oder 2, dadurch gekennzeichnet, daß die Schutzabdeckung des zweiten Teils des Schlauchs aus einem Gewebe besteht, das in Gummi oder Kunststoff eingebettet ist, der an der Außenfläche des Innenteils des Schlauchs nicht anhaftet.

4. Schlauch nach einem der Ansprüche 1 bis 3, bei dem das glatte Innenrohr aus einer Gummimischung besteht, die gegenüber chemisch oder mechanisch angreifenden Flüssigkeiten widerstandsfähig ist, oder aus einer Gummimischung besteht, die hygienische Eigenschaften aufweist, wie sie für die Handhabung von Nahrungsmitteln erforderlich sind, oder aus einer Gummimischung besteht, die elektrisch leitfähig ist und eine statische Aufladung verhindert.

## Claims

1. Flexible rubber tube for intake or delivery of fluids, characterised in that it comprises two coaxial members, namely: an internal member formed by joined elements comprising a smooth internal rubber tube in contact with the fluid conveyed, a fabric-reinforced wall and a coil of metallic or plastics material; and an external member formed by unjoined elements comprising a flexible protective cover mating with the turns of the coil of the internal member and a second coil equally consisting of metallic or plastics material engaged in the hollows of the cover, between the turns of the first coil and projecting partially with respect to the external surface of the tube.

2. Tube according to claim 1, characterised in that the coil of the internal member of the tube is comprised between two layers of reinforcing fabric, the outermost fabric layer of this first member engaging the turns of this coil by penetrating between them.

3. Tube according to claims 1 or 2, characterised in that the protective cover of the second member of the tube is a fabric coated with rubber or plastics material which does not adhere to the outer surface of the internal member of the tube.

4. Tube according to one of the claims 1 to 3, in which the smooth internal tube is produced from a rubber composition able to withstand chemically aggressive fluids or abrasive fluids, or from a rubber composition presenting the hygiene features required for handling food products, or from a rubber composition which is electrically conductive and able to eliminate static electricity.

## FIG_1

## FIG_2